# DEMANDE DE BREVET EUROPEEN

(11) **EP 0 546 972 A1**
(43) Date de publication de la demande: **16.06.1993**
(21) Numéro de dépôt: 92440141.7
(22) Date de dépôt: 08.12.1992
(51) Int. Cl.: B60R 21/02

(54) **Dispositif de maintien pour passager arrière d'un véhicule automobile**

(30) Priorité: 09.12.1991 FR 9115752
(71) Demandeur: Vandamme, Georges, F-59700 Marcq-en-Baroeul (Nord) (FR)
(72) Inventeur: Vandamme, Georges, F-59700 Marcq-en-Baroeul (Nord) (FR)
(74) Mandataire: Lepage, Jean-Pierre

(57) **Abrégé**

Dispositif de maintien pour passager arrière d'un véhicule automobile qui comporte trois places arrière et deux sièges avant montés mobiles et munis d'appuis-tête.

Selon l'invention, il comprend un ensemble monobloc placé entre les sièges avant qui présentent :
- des moyens (10) de maintien rigides réglables en longueur pour s'adapter à l'écartement entre les montants (8,9) des appuis-tête (6,7),
- des moyens de liaison (20,22,23) montés articulés pour s'adapter aux changements de position des sièges (1,2),
- des moyens de fixation (30) aux montants (8, 9) des appuis-tête qui coopèrent avec les moyens de liaison (20,22,23).

## Description

La présente invention a pour objet un dispositif de maintien pour passager arrière d'un véhicule automobile qui présente trois places arrière et deux sièges avant montés mobiles et munis d'appuis-tête.

Elle trouvera son application dans le domaine de la construction automobile ainsi que dans celui de la fabrication d'accessoires destinés à l'automobile.

Les passagers arrière des véhicules automobiles sont soumis aux accélérations et aux décélérations du véhicule ce qui entraîne des mouvements intempestifs et non désirés du corps de ces passagers.

Par exemple, s'il se produit une collision ou un choc frontal ou tout simplement dans le cas d'un arrêt résultant d'un freinage brusque, le corps de ses passagers est soulevé vers l'avant.

Pour diminuer ces risques, la législation en matière de sécurité a imposé l'obligation du port de la ceinture de sécurité pour tous les passagers arrière.

Ces ceintures arrière sont généralement constituées par une sangle montée en baudrier qui absorbe l'énergie cinétique résultant du mouvement du corps du passager en évitant qu'il ne se projette en avant. Cette sangle est réglable en dimension d'utilisation au moyen d'un enrouleur et elle se trouve fixée par trois points d'ancrage disposés sur le véhicule.

De plus, dans le cas de chocs violents, le passager peut également se maintenir sur des poignées montées latéralement au niveau supérieur des portières d'ouverture arrière du véhicule.

Toutefois, dans le cas de véhicules qui présentent trois places arrière, il est impossible de fixer au centre une ceinture à trois points d'ancrage avec un baudrier. C'est la raison pour laquelle, afin de protéger le passager disposé, dans la place médiane, on utilise une ceinture ventrale.

Or, en pratique, cette ceinture ventrale ne donne pas entière satisfaction.

En effet, en cas de chocs violents, le corps de ce passager n'est pas maintenu efficacement et toute sa partie supérieure se trouve, sous l'action de son inertie, décollée du dossier de la banquette arrière et projetée vers l'avant puisqu'il n'est pas maintenu par un système de baudrier.

De plus, étant donné qu'il se trouve placé au centre du véhicule, ce passager ne peut pas-non plus avoir accès aux poignées situées au-dessus des portières arrière car elles ne sont accessibles qu'aux passagers assis sur les côtés. Ce passager ne peut donc pas se maintenir efficacement et se protéger contre les chocs.

Le but principal de la présente invention est de proposer un dispositif de maintien pour passagers arrière d'un véhicule qui permet en outre de pallier aux inconvénients des dispositifs actuellement connus en permettant au passager assis au centre de la banquette arrière de se maintenir en cas d'accélération et/ou de décélération brutale du véhicule.

Un autre but de la présente invention est de fournir une barre unibloc de maintien rigide et résistante pour éviter les efforts de distorsion en cas d'action portée uniquement d'un seul côté de la barre.

Un avantage du dispositif de maintien conforme à l'invention est qu'il est facilement adaptable à tous les types de véhicules quel que soit l'écartement existant entre les montants des appuis-tête.

Un autre avantage de l'invention réside dans le fait que ce dispositif peut être facilement ajusté quelle que soit la position prise par translation ou inclinaison des sièges avant.

Un autre avantage de la présente invention est qu'elle propose un dispositif qui peut s'adapter quels que soient les types de véhicules et quel que soit le type d'appui-tête installé sur les sièges avant. En effet, ce dispositif comprend une barre qui est équipée de moyens permettant la mise en place sur des appuis-tête fixes ou sur des appuis-tête démontables.

L'invention propose également un dispositif de maintien qui est facilement mis en place par l'automobiliste en n'exigeant aucun outillage spécifique.

D'autres buts et avantages de la présente invention apparaîtront au cours de la description qui va suivre qui n'est donnée qu'à titre indicatif et qui n'a pas pour but de la limiter.

A cette fin, le dispositif de maintien pour passagers arrière d'un véhicule automobile qui comporte trois places arrière et deux sièges avant montés mobiles et munis d'appuis-tête est caractérisé par le fait qu'il comprend un ensemble monobloc placé entre les sièges avant qui présente :
- des moyens de maintien rigides réglables en longueur pour s'adapter à l'écartement entre les montants des appuis-tête,
- des moyens de liaison montés articulés pour s'adapter au changement de position des sièges avant,
- des moyens de fixation aux montants des appuis-tête qui coopèrent avec les moyens de liaison.

L'invention sera mieux comprise si l'on se réfère à la description ci-dessous ainsi qu'aux dessins en annexe qui en font partie intégrante.

La figure 1 est une vue schématique qui illustre en coupe une voiture équipée d'un dispositif conforme à l'invention.

La figure 2 est une vue en perspective qui illustre un dispositif conforme à l'invention.

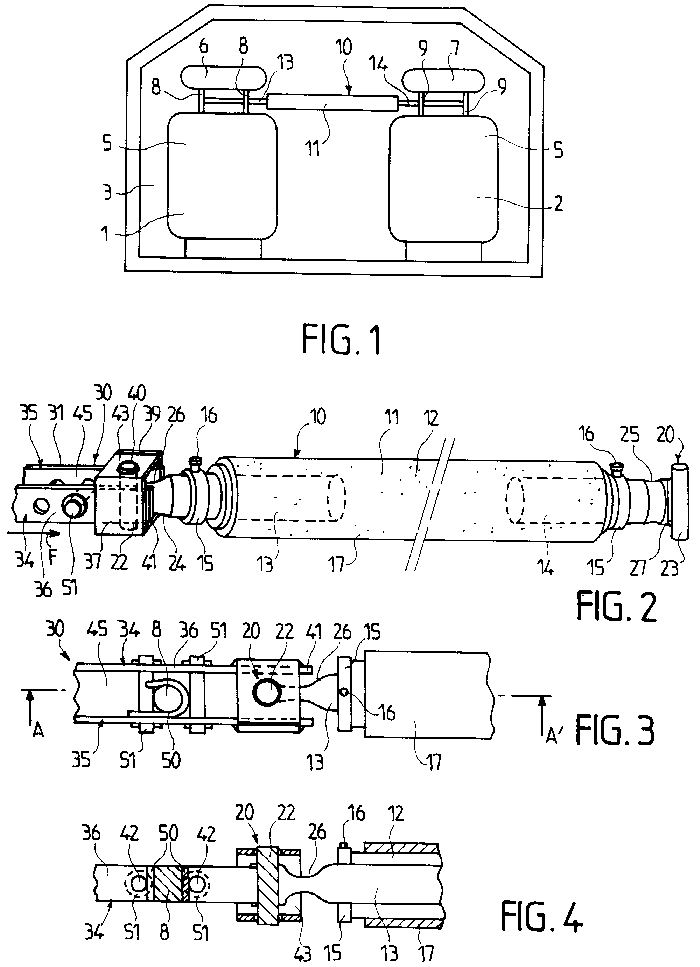

La figure 2 est une vue de face qui montre un dispositif conforme à l'invention.

La figure 4 est une vue en coupe selon la ligne A-A' de la figure 3.

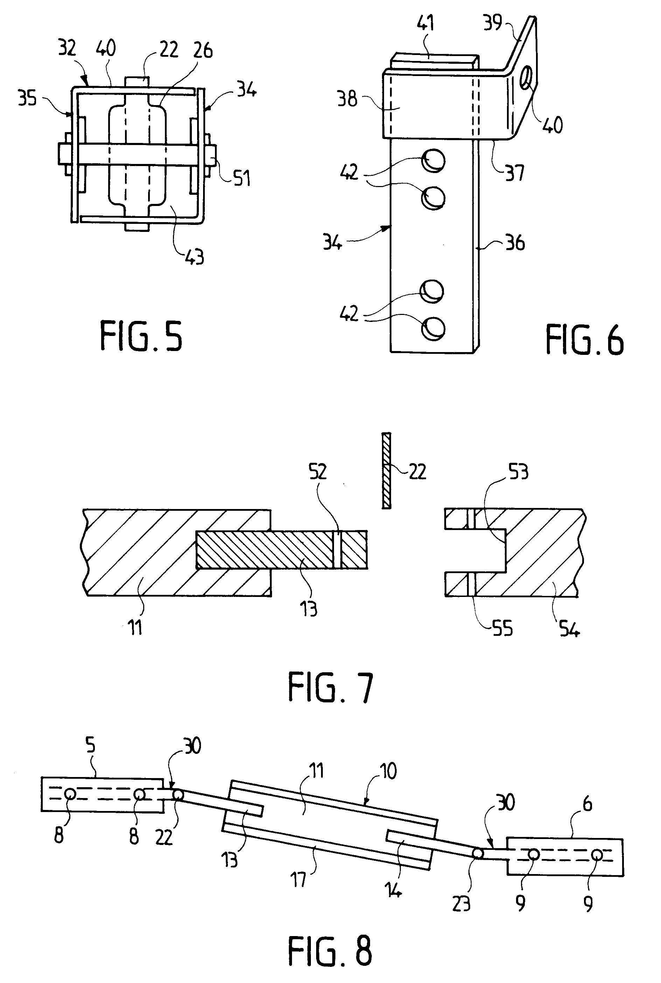

La figure 5 est une vue selon la flèche F de la figure 2.

La figure 6 est une vue schématique qui illustre les moyens de liaison associés aux moyens de fixation.

La figure 7 est une vue en coupe d'une variante de réalisation de la liaison entre la barre et la pièce de fixation.

La figure 8 est une vue schématique de dessus qui illustre un dispositif conforme à l'invention lorsque les sièges avant du véhicules ne sont plus dans un même plan.

La présente invention a pour objet un dispositif de maintien pour passager arrière d'un véhicule automobile. Elle trouvera son application dans le domaine de la fabrication des automobiles ainsi que dans le domaine de la réalisation d'accessoires destinés à des automobiles.

La figure 1 montre en coupe transversale les sièges avant 1 et 2 d'un véhicule automobile dont l'habitacle 3 intérieur a été limité d'une part par la carrosserie et d'autre part par les vitrages.

Les sièges 1 et 2 présentent un dossier 5 ici de forme quasi-rectangulaire. Ces sièges 1 et 2 sont montés mobiles en translation et peuvent également pivoter pour s'incliner. Ils sont réalisés en tout type de matériau souple et résistant et comportent chacun dans leur partie supérieure un appui-tête 6, 7. Ces appuis-tête 6, 7 sont d'un type classique, et sont ici représentés dans une position dans laquelle ils sont soulevés par rapport aux dossiers 5 de chaque siège 1 et 2 par des montants 8, 9 verticaux dont l'une des extrémités est solidaire de l'appui-tête 6, 7 et dont l'autre extrémité est logée à l'intérieur d'un orifice ménagé dans le dossier 5.

Selon l'invention, le dispositif comprend des moyens de maintien rigides 10 qui sont disposés entre les sièges avant 1 et 2 au niveau des appuis-tête 6, 7 par des moyens de fixation qui seront décrits ultérieurement.

Dans un mode de réalisation représenté, le dispositif selon l'invention comporte des moyens de maintien 10 rigides monoblocs. Ces moyens sont constitués comme plus particulièrement illustrés aux figures 2, 3 et 4 par une barre 11 qui comporte un tube central 12 à l'intérieur duquel est monté un tube 13 et un tube 14 coulissant à chacune de ses extrémités.

Pour cela, le diamètre intérieur du tube central 12 est légèrement supérieur au diamètre extérieur de chaque tube coulissant 13, 14. Les tubes 13 et 14 pénètrent suffisamment à l'intérieur du tube 12 pour conférer à la barre 11 une rigidité suffisante permettant un maintien efficace de la personne même en cas de choc frontal violent.

Il est à noter que les tubes 13 et 14 peuvent coulisser indépendamment l'un de l'autre à l'intérieur du tube central 12 de sorte que ce dispositif peut être placé sur des supports qui ne sont pas disposés à un écartement identique.

Bien entendu, on conçoit que cette possibilité d'ajustement de la barre de maintien 11 permet également l'adaptation du dispositif quel que soit l'écartement entre les montants 8, 9 des appuis-tête 6 et 7.

Pour éviter qu'un tube télescopique 13 et 14 se déplace de façon intempestive, une bague de serrage 15 associée à une vis 16 montée radialement est placée à chacune des extrémités du tube 12. Il en résulte que lorsque la vis 16 est bloquée, contre le tube 13 et 14, ils ne peuvent plus coulisser et sont maintenus dans une position déterminée. Les tubes 13 et 14 sont ainsi rendus solidaires de façon rigide du tube 12 ce qui confère à l'ensemble de la barre 11 une résistance mécanique suffisante évitant les phénomènes de torsion localisés de sorte que la personne peut se maintenir efficacement même en cas de choc frontal très violent.

Pour amortir les chocs notamment lorsqu'ils sont violents, le tube 12 comporte une gaine 17 en matière caoutchoutée. Cette gaine 17 facilite également sa préhension. Cette forme de réalisation permet donc au passager qui se trouve au centre du véhicule de s'accrocher à pleine main à la barre 11 et donc d'encaisser les chocs.

Le dispositif comprend également comme plus particulièrement illustré aux figures 2, 3 et 4 des moyens de liaison 20 montés articulés. Ces moyens de liaison 20 sont constitués par un axe 22 et 23 qui est disposé à chacune des extrémités extérieures de chaque tube 13 et 14. Chaque axe 22 et 23 est placé perpendiculairement à l'axe de la barre 11. Dans un mode de réalisation, chaque extrémité extérieure de chaque tube 13 et 14 présente un méplat 24 et 25 situé au prolongement du tube 13 et 14 qui se termine par un palier 26 et 27 à l'intérieur duquel chaque axe 22 et 23 est monté immobile.

Le dispositif comprend également des moyens de fixation 30, constitués ici par deux ensembles 31, 32 de pièces de fixation. Chaque ensemble de pièces 31, 32 comporte deux pièces 34, 35 de fixation symétrique dont une est plus particulièrement illustrée à la figure 6.

En se référant à la figure 6, on voit que cette pièce de fixation 34 présente un corps allongé 36 et une tête 37 en forme de L. Cette tête 37 présente une base 38 fixée à l'une des extrémités du corps 36 et un pied 39 à l'intérieur duquel est ménagé un orifice 40. Dans un mode de réalisation préférentiel, on assujettit sensiblement à l'une des extrémités la base 38 en laissant une languette 41 qui fait saillie à cette extrémité.

Le corps 36 présente également une répartition d'orifices 42 qui ici sont au nombre de quatre. Le nombre et la dimension du diamètre de ces orifices 42 sont notamment variables en fonction des utilisations.

En position montée, comme plus particulièrement illustrée aux figures 2, 3, 4 et 5, chaque ensemble 31 et 32 de deux pièces de fixation 34, 35 délimite un logement 43 de forme sensiblement carrée. Ce logement 43 résulte de l'association de deux têtes 37 en forme de L de deux pièces 34 et 35 associées en regard l'une de l'autre. A l'intérieur de ce logement 43 vient se loger l'axe 22 ou 23 en traversant de part en part l'orifice 40 dont le diamètre est légèrement supérieur à celui du diamètre extérieur des axes 22 et 23 comme montré à la figure 5.

Par ailleurs, chaque ensemble de pièces 31,32 de fixation délimite un logement longitudinal 45 qui résulte de l'association des deux corps allongés 36 placés en regard l'un de l'autre.

Selon l'invention, les axes de rotation 22, 23 permettent un pivotement vers l'avant ou vers l'arrière de la barre 11, ce qui permet au dispositif de s'adapter au changement de position des sièges avant 1 et 2 du véhicule lorsque ceux-ci sont déplacés, soit par translation, soit par pivotement et qu'ils ne sont plus situés dans un même plan tel qu'illustré à la figure 8.

Pour éviter tout pivotement trop important de la barre 11, et afin de permettre un maintien efficace de la personne notamment en cas de choc frontal avant violent, la variation de la course de la barre 11 résultant du mouvement des axes 22, 23 est limitée par la languette 41 du corps 36 qui vient en position de butée contre le méplat 26-27 ménagé à l'extrémité de chaque tube 13, 14.

La mise en place du dispositif sur des appuis-tête 6, 7 non déboîtables s'effectue à l'intérieur de logements de forme adaptée pour recevoir l'axe 22 et 23. Ces logements peuvent être placés soit à la base des montants 8, 9 de chaque appui-tête 6, 7, soit sur le support du dossier des sièges 1 et 2. De tels logements peuvent être placés par tous moyens appropriés, soit en série, soit en option.

Dans ce mode de réalisation, la mise en place du dispositif est aisée puisqu'il suffit d'introduire les axes 22, 23 à l'intérieur de ces logements et ensuite d'enfoncer les appuis-tête 6, 7 à l'intérieur du dossier de chaque siège 1, 2. On obtient ainsi une immobilisation parfaite du dispositif de sorte que la barre 11 remplisse sa fonction de protection du passager arrière contre les chocs frontaux violents.

Dans le cas d'appuis-tête déboîtables tels que ceux représentés à la figure 1, le logement 45 délimité par les deux corps 36 de chaque pièce de fixation 34 et 35 comporte à chacune de ses extrémités un collier 50. Ce collier 50 en matière souple et flexible est démontable et il est fixé par une vis 51 traversant de part en part le logement 45 et les orifices 42 ménagés sur chaque pièce 33, 34 placée en regard l'une de l'autre.

Il suffit donc pour placer le dispositif d'introduire le collier 50 par encliquetage à l'intérieur d'un montant 8, 9 de chaque appui-tête 6-7 des sièges avant 1, 2 du véhicule.

Pour accroître la rigidité de la barre et éviter les phénomènes mécaniques de torsion localisée en cas de chocs violents, dans un mode de réalisation préférentiel, chaque logement 45 comporte avantageusement deux colliers 50 qui viennent s'encliqueter sur chaque montant 8-9 de chaque appui-tête 6, 7.

D'autres modes de maintien peuvent être envisagés sans pour autant sortir du cadre de l'invention.

Dans une variante de réalisation, comme plus particulièrement illustré à la figure 7, l'axe 22-23 n'est plus supporté par le tube 13-14. Dans ce cas, chaque tube 13, 14 présente à chacune de ses extrémités libre un orifice 52. L'extrémité libredu tube 13-14 vient se placer dans un logement 53 ménagé dans une pièce de fixation 54 selon un assemblage du type tenon mortaise. Cette pièce de fixation 54 comporte un orifice 55 qui la traverse de part en part de sorte qu'en position montée, il se trouve en regard de l'orifice 52 ménagé à l'extrémité de chaque tube 13 et 14.

Cette pièce de fixation 54 est assujettie sur le dossier 5 de chaque siège avant 1, 2, en série ou en option par tous moyens appropriés.

En position montée, on introduit l'axe 22 et 23 à l'intérieur des orifices 52 et 55 afin d'assurer une mobilité de la barre 11 qui permette de lui conférer une liberté de mouvements.

Le mode de réalisation qui vient d'être décrit n'est donné qu'à titre indicatif et d'autres mises en oeuvre de la présente invention, à la portée de l'homme du métier, pourraient être adoptées sans pour autant sortir du cadre de celle-ci.

## Revendications

1. Dispositif de maintien pour passager arrière d'un véhicule automobile qui comporte trois places arrière et deux sièges avant montés mobiles et équipés d'appuis-tête, caractérisé en ce qu'il comprend un ensemble monobloc placé entre les sièges avant qui présentent :
- des moyens de maintien (10) rigides réglables en longueur pour s'adapter à l'écartement entre les montants (8-9) des appuis-tête (6-7),
- des moyens de liaison (20) articulés pour s'adapter au changement de position des sièges avant (1, 2),
- des moyens de fixation (30) aux montants des appuis-tête (6, 7) qui coopèrent avec les moyens de liaison (20).

2. Dispositif selon la revendication 1, caractérisé en ce que les moyens de maintien rigides (10) sont constitués par une barre (11) comportant un tube central (12) à l'intérieur duquel est monté coulissant à chacune de ses extrémités un tube télescopique (13-14).

3. Dispositif selon la revendication 1, caractérisé en ce que les moyens de liaison (20) sont constitués par un axe d'articulation (21-22) disposés à chacune de l'extrémité libre du tube coulissant (13-14) perpendiculairement à l'axe du tube central (11).

4. Dispositif selon la revendication 1, caractérisé en ce que les moyens de fixation (30) sont constitués par deux ensembles (31, 32) de pièces de fixation.

5. Dispositif selon la revendication 4, caractérisé en ce que chaque ensemble de pièces (31, 32) est constitué par deux pièces (34, 35) de fixation symétriques qui présentent un corps allongé (36) et une tête (37) en forme de L assujettie à l'une des extrémités du corps (36).

6. Dispositif selon la revendication 5, caractérisé en ce que la tête (37) en forme de L présente une base (38) et un pied (39) à l'intérieur duquel est ménagé un orifice (40).

7. Dispositif selon la revendication 5, caractérisé en ce que des orifices (42) sont régulièrement ménagés sur le corps (36) de chaque pièce de fixation (34-35).

8. Dispositif selon la revendication 5, caractérisé en ce que chaque ensemble (31-32) de deux pièces (34, 35) délimite un logement (45) constitué par le corps allongé (37) de chaque pièce (34, 35) de fixation en regard l'un de l'autre à l'intérieur duquel vient se placer au moins un collier (50) démontable.

9. Dispositif selon la revendication 5, caractérisé en ce que chaque ensemble (31-32) de pièces (34-35) délimite un logement (43) de forme sensiblement carrée constitué par l'association de deux têtes (37) en forme de L placés en regard l'une de l'autre.

10. Dispositif selon la revendication 1, caractérisé en ce qu'une gaine (17) en matière caoutchoutée entoure le tube central.

11. Dispositif selon la revendication 1, caractérisé en ce qu'il comporte des moyens pour bloquer le tube télescopique (13 et 14) constitués par une vis (16) montée radialement dans une bague (15) solidaire de l'extrémité du tube central (12).
